Europäisches Patentamt

European Patent Office

Office européen des brevets

(11) Publication number: **0 331 520**
**A1**

## (12) EUROPEAN PATENT APPLICATION

(21) Application number: **89302157.6**

(22) Date of filing: **03.03.89**

(51) Int. Cl.⁴: **A 23 G 9/28**

(30) Priority: **03.03.88 GB 8805059**

(43) Date of publication of application:
**06.09.89 Bulletin 89/36**

(84) Designated Contracting States:
**DE ES FR GB GR IT SE**

(71) Applicant: **MITCHELL & COOPER LIMITED**
**Framfield Road**
**Uckfield Sussex TN22 5AX (GB)**

(72) Inventor: **Cooper, William Anthony**
**Framfield Road**
**Uckfield Sussex, TN22 5AX (GB)**

(74) Representative: **Wilson, Nicholas Martin et al**
**WITHERS & ROGERS 4 Dyer's Buildings Holborn**
**London EC1N 2JT (GB)**

The title of the invention has been amended (Guidelines for Examination in the EPO, A-III, 7.3).

(54) **Hand scoop for food, such as ice cream.**

(57) A hand portioner (1;101) has a bowl (2;102) to scoop up food, a handle (3;103), a scraper (10;110) within the bowl for separating scooped food from the bowl, and drive means (7,8;107,108) for effecting movement of the scraper within the bowl. The handle (3;103) comprises an elongate unitary member bent back upon itself intermediate its ends to define a pivot point (P) and to provide two juxtaposed handle parts (5,6;105,106). One handle part (5;105) is fixed to the bowl at one end and the other handle part (6;106) on manipulation is moveable about the pivot point against a resilience inherent solely in the material from which the handle is made. The drive means (7,8;107,108) comprises a co-operating rack section (7;107) and pinion (8;108) one of which is associated with the scraper (10;110) and the other of which is provided on the handle so as to position the drive means intermediate the pivot point position (P) and the bowl (2;102).

FIG.1.

EP 0 331 520 A1

## Description

## PORTIONER

This invention relates to a hand portioner for serving portions of products such as ice-cream.

Known hand portioners include a metal bowl, a scraper and a handle. The handle can be formed of two spring-returnable parts interconnected by a pivot pin, the two parts being squeezed together to operate the scraper. Alternatively, the handle may be a single part with a thumb operated spring-returnable lever mounted on the one part and operable to drive the scraper. In our own prior United Kingdom Patent No. 1343123 there is provided a portioner of the type having a handle consiting of two parts which are squeezed together in which the parts are returned to their original position on the release of pressure solely by the resilience of the material from which the handle is made.

An object of the present invention is to provide an improved hand portioner.

According to the present invention there is provided a hand portioner comprising a bowl to scoop up food, a handle, a scraper for separating scooped food from the bowl, and drive means for the scraper, the drive means being operable by manipulation of a member moveable against a biassing force about a pivot point on the handle to cause the scraper to separate food from the bowl, the drive means being positioned intermediate the bowl and the pivot point. With the arrangement of the present invention a user's hand may be positioned closer to the bowl to improve leverage which is particularly advantageous for ice-cream use where the hand needs to be placed nearer to the bowl than portioners particularly designed for soft food products such as mashed potato.

Preferably the moveable member comprises a part of the handle, the handle including two parts at least one of which is movably relative to the other about the pivot Alternatively, the moveable member may comprise a separate lever pivoted on the handle. The biassing force could be a spring means but is preferably a biassing force attained solely by the resilience of a material from which a two part handle is made, the two parts of the handle being integral. The bowl may be integral with the handle or may be rigidly affixed thereto. The drive means is suitably a co-operating rack and pinion.

In the preferred embodiment there is provided a hand portioner comprising a bowl to scoop up foods such as ice-cream, a scraper for separating scooped food from the bowl, drive means for effecting movement of the scraper within the bowl, and a handle comprising an elongate unitary member bent back upon itself intermediate its ends to define a pivot point and to provide two juxtaposed handle parts one of which is fixed to the bowl at one end and the other of which is moveable relative to the one part by manipulation about the pivot point against a resilience inherent solely in the material from which the handle is made, the drive means including a co-operating rack and pinion device one of which is associated with the scraper and the other of which is provided on the other end of the handle so as to position the drive means intermediate the pivot point and the bowl.

The invention will now be described by way of example with reference to the accompanying drawings which illustrate two embodiments of hand portioner of the invention and in which:

Figure 1 is a front perspective view of a first embodiment of hand portioner;

Figure 2 is a side elevation of the hand portioner of Figure 1;

Figure 3 is an underneath plan view of the hand portioner of Figure 1;

Figure 4 is a front perspective view of a second embodiment of hand portioner;

Figure 5 is a side elevation of the hand portioner of Figure 4; and

Figure 6 is an underneath plan view of the hand portioner of Figure 4.

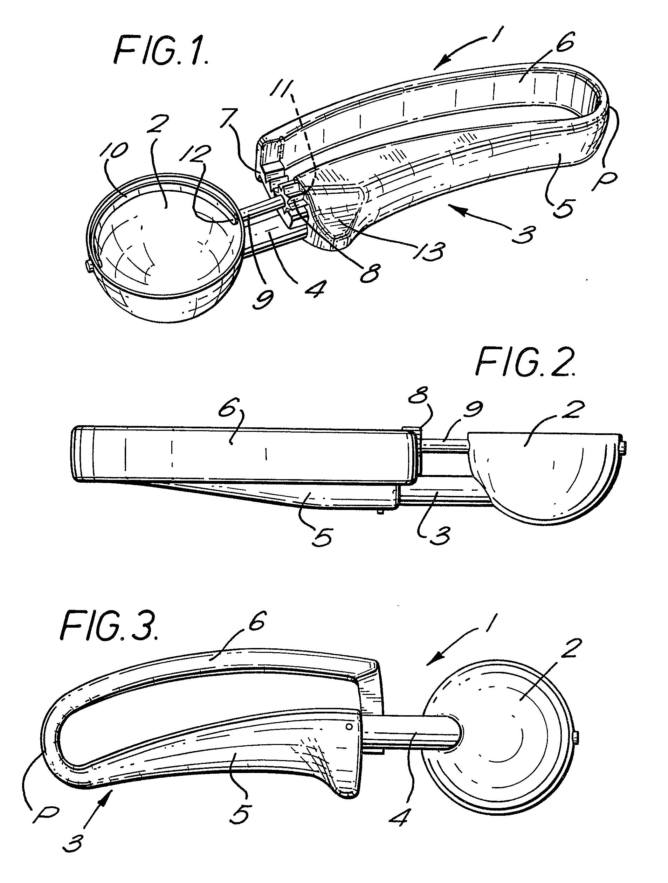

In the drawings of the first embodiment a hand portioner (1) has bowl (2) and a handle (3). The bowl (2) is made of stainless steel and is connected to the handle (3) by way of a short stainless steel neck (4). The handle (3) is made of resilient material and comprises two parts (5) and (6). The two parts (5) and (6) are joined together at the end of the portioner remote from the bowl (2) and the joint forms a resilient pivot point (P) when the two parts are squeezed together. At the free end of the part (6) at the handle (3) there is provided a laterally extended rack section (7) which, upon squeezing of the handle, is moveable across neck (4) of the portioner as seen from Figure 1. The rack section (7) co-operates with a pinion (8) which is mounted at one end of a rod (9). The rod (9) has at its other end a scraper (10) disposed within the bowl (2). The rod (9) is held in position by a hole (11) in an upper surface of the handle part (5) and by a small connection between an end of the scraper (10) and a second hole (12) formed in the bowl.

The rod (9) is able to rotate within its seating in order to move the scraper (10) on movement of the pinion (8). The hand portioner of this embodiment has a handle (3) made of plastics material in which the handle part (5) is ergonomically designed and includes a thumb seating (13) to provide a comfortable grip. As compared with previous hand portioners the operating rack is reversed and returned ahead of the handle allowing the hand to be placed as close to the bowl as is practical. This has the advantage that it reduces the leverage required to scrape ice-cream into the bowl of the portioner. In addition, the lack of joints and springs make the hand portioner easy to clean and more hygienic.

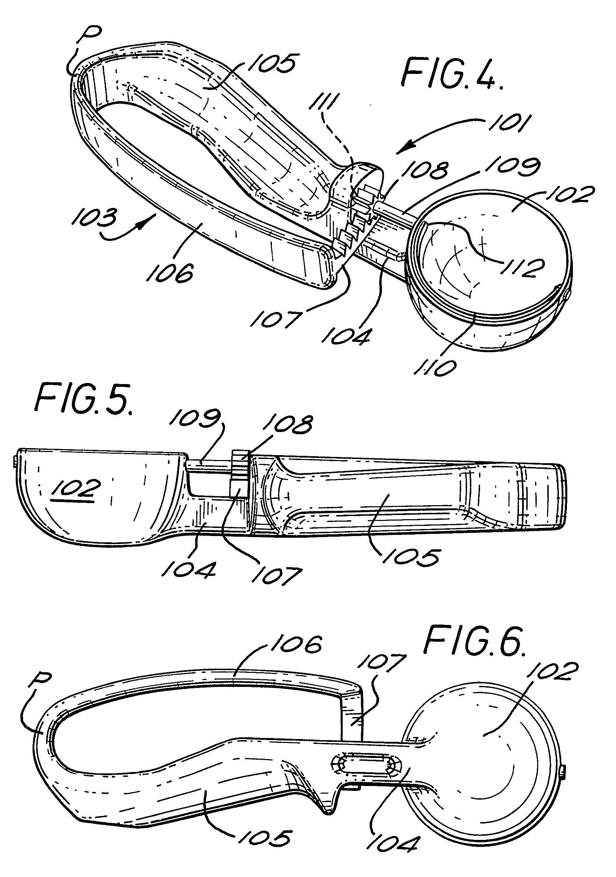

The alternative arrangement disclosed in Figures 4 to 6, in which the same parts have been referenced the same but is on one hundred series, is similar to that disclosed in relation to Figures 1 to 3 except that the bowl (102) is made of plastics material and is made integral with the handle (103) with the short neck (104). The ergonomic design of the handle part (105) also differs in appearance from the handle part (5) but otherwise the handle is adapted to operate as described with reference to Figures 1 to 3.

In operation of both embodiments the hand portioner (1;101) is gripped by its handle and the user's thumb positioned on the outside upper surface of the handle part (6;106). The bowl (2;102) is then filled with the appropriate food stuff such as ice-cream by scooping the bowl through the food to be portioned. The food material is then removed from the bowl by exerting pressure on the handle part (6;106) to squeeze the handle of the hand portioner to move the handle part (6;106) towards the handle part (5;105). This has the effect of actuating the rack and pinion drive which in turn, via rotation of the rod (9;109) operates the scraper (10;110). The actuation of the scraper (10;110) causes the scraper to revolve through about one half of a revolution and this releases the food material from the bowl. When the pressure exerted on the handle part (6;106) is eased, the scraper returns to its original position due to the resilience of the handle and the inherent spring effect operating about the resilient pivot (P) between the two parts of the handle (3;103). Thus, in both embodiments the handle of the hand portioner is returned to its normal position solely by the returning movement achieved by its design and the resilience of the material from which the handle is made.

## Claims

1. A hand portioner comprising a bowl to scoop up food, a handle, a scraper for separating scooped food from the bowl, and drive means for the scraper, the drive means being operable by manipulation of a member moveable against a biassing force about a pivot point on the handle to cause the scraper to separate food from the bowl, the drive means being positioned intermediate the bowl and the pivot point.

2. A hand portioner according to Claim 1 wherein the moveable member comprises a part of the handle, the handle including two parts at least one of which is moveably relative to the other about the pivot.

3. A hand portioner according to Claim 2 wherein the biassing force is a force attained solely by the resilience of a material from which the handle is made.

4. A hand portioner according to Claim 2 or 3 wherein the two parts of the handle are integral.

5. A hand portioner according to any of the preceding claims wherein the drive means is a co-operating rack and pinion.

6. A hand portioner according to Claim 5 wherein the handle includes two parts, one of which is moveable relative to the other about the pivot point and includes a rack section of the co-operating rack and pin drive means.

7. A hand portioner according to Claim 6 wherein the pinion of the rack and pinion drive means is supported on a rotatable rod extending between the scraper within the bowl and a seating on the other part of the handle.

8. A hand portioner comprising a bowl to scoop up foods such as ice-cream, a scraper for separating scooped food from the bowl, drive means for effecting movement of the scraper within the bowl, and a handle comprising an elongate unitary member bent back upon itself intermediate its ends to define a pivot point and to provide two juxtaposed handle parts one of which is fixed to the bowl at one end and the other of which is moveable relative to the one part by manipulation about the pivot point against a resilience inherent solely in the material from which the handle is made, the drive means including a co-operating rack and pinion device one of which is associated with the scraper and the other of which is provided on the other end of the handle so as to position the drive means intermediate the pivot point and the bowl.

FIG.1.

FIG.2.

FIG.3.

FIG.4.

FIG.5.

FIG.6.

# EUROPEAN SEARCH REPORT

**European Patent Office**

European Patent Office

EUROPEAN SEARCH REPORT

Application Number

EP 89 30 2157

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 208 404 (W. SCHLESSEL)<br>* Figures 1-3,6; column 2, lines 30-66 * | 1,2,5,6,7 | A 23 G 9/28 |
| Y | | 3,4,8 | |
| Y | NL-C- 64 680 (J.V. VELZEN)<br>* Page 1; figure 21 * | 3,4,8 | |
| X | DE-C- 204 991 (INT. CONSOLIDATED MANUFACTURING CO.)<br>* Figures 1-4 * | 1-4 | |
| A | US-A-1 842 709 (E.C. BAUGHMAN)<br>* Figure 7; page 2, lines 47-76 * | 1-8 | |
| A | DE-A-2 044 771 (STÖCKEL SÖHNE METALLWARENFABRIK) | | |
| A | US-A-1 430 979 (J.M. GIBBS) | | |
| A | BE-A- 472 274 (J. PERSOONS) | | TECHNICAL FIELDS SEARCHED (Int. Cl.4) |
| A | US-A-1 826 818 (C.G. PALMER) | | A 23 G |
| A | FR-A-2 282 232 (J. GARELLO) | | |
| A,D | GB-A-1 343 123 (W.T. COOPER et al.) | | |

The present search report has been drawn up for all claims

| Place of search | Date of completion of the search | Examiner |
|---|---|---|
| THE HAGUE | 19-04-1989 | GUYON R.H. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document